# EUROPÄISCHE PATENTSCHRIFT

(11) **EP 3 726 434 B1**
(45) Veröffentlichungstag und Bekanntmachung des Hinweises auf die Patenterteilung: **12.10.2022**
(21) Anmeldenummer: 20168783.7
(22) Anmeldetag: 08.04.2020
(51) Int. Cl.: G06N 3/04, B60W 50/00, G06N 3/08

(54) **VERFAHREN ZUR REDUZIERUNG VON ABGASEMISSIONEN EINES ANTRIEBSSYSTEMS EINES FAHRZEUGS MIT VERBRENNUNGSMOTOR**
METHOD FOR REDUCING EXHAUST EMISSIONS OF A VEHICLE DRIVE SYSTEM WITH COMBUSTION ENGINE
PROCÉDÉ DE RÉDUCTION DES ÉMISSIONS DE GAZ D'ÉCHAPPEMENT D'UN SYSTÈME D'ENTRAÎNEMENT D'UN VÉHICULE AUTOMOBILE À COMBUSTION INTERNE

(30) Priorität: 16.04.2019 DE 102019205521
(43) Veröffentlichungstag der Anmeldung: 21.10.2020
(73) Patentinhaber: Robert Bosch GmbH, 70442 Stuttgart (DE)
(72) Erfinder: Markert, Heiner, 70178 Stuttgart (DE); Angermaier, Stefan, 70327 Stuttgart (DE)

(56) Entgegenhaltungen:
- EP-A1- 2 610 836
- DE-A1-102012 018 359
- DE-A1-102013 200 166
- US-A1- 2012 330 479
- US-A1- 2018 364 725
- CHEN ZEYU ET AL: "Driving cycle development for electric vehicle application using principal component analysis and k-means cluster: with the case of Shenyang, China", ENERGY PROCEDIA, ELSEVIER, NL, Bd. 142, 31. Januar 2018 (2018-01-31), Seiten 2264-2269, XP085335148, ISSN: 1876-6102, DOI: 10.1016/J.EGYPRO.2017.12.628
- YUHUI PENG ET AL: "Development of a representative driving cycle for urban buses based on the K-means cluster method", CLUSTER COMPUTING, BALTZER SCIENCE PUBLISHERS, BUSSUM, NL, Bd. 22, Nr. Suppl 3, 4. Januar 2018 (2018-01-04), Seiten 6871-6880, XP036923336, ISSN: 1386-7857, DOI: 10.1007/S10586-017-1673-Y [gefunden am 2018-01-04]

## Beschreibung

Die Erfindung betrifft Verfahren zur Reduzierung von Abgasemissionen eines Antriebssystems eines Fahrzeugs mit Verbrennungsmotor sowie hierzu eingerichtete Computerprogramme.

### Stand der Technik

Die DE 10 2017 107 271 A1 offenbart ein Verfahren zur Ermittlung eines Leitfahrzyklus für Fahrversuche zur Ermittlung von Abgasemissionen von Kraftfahrzeugen. Dabei werden Geschwindigkeitsprofile für die verschiedenen Fahrzyklen auf Basis der Parametersätze abgeleitet. Ziel ist das Ermitteln eines Leitzyklus, der möglichst den "Maximal"-Emissionsfall innerhalb gegebener Randbedingungen widerspiegelt.

Aus der DE 10 2012 018 359 A ist ein Verfahren zum Erzeugen eines Fahrzyklus-Datensatzes, der einen Fahrzyklus für eine Fahrsimulation eines Fahrzeugs repräsentiert, bekannt.

Aus der US 2012/330479 A ist ein Verfahren zum Erzeugen von Fahrzeugsfahrzyklen bekannt.

### Offenbarung der Erfindung

In der Praxis erfolgt aktuell die Ermittlung der Emissionen eines Antriebssystems im Wesentlichen in zwei Stufen:
3) Ein oder mehrere repräsentative Fahrzyklen werden ermittelt, die das Fahrverhalten aller Fahrzeuge beschreiben sollen. Solche Fahrzyklen sollen auch für das Antriebssystem anspruchsvolle Fahrsituationen abbilden (z.B. Anteile mit hoher Dynamik und / oder vielen Anfahrvorgängen beinhalten). Dies umfasst beispielsweise auch vom Gesetzgeber vorgeschriebene Prüfzyklen, z.B. den WLTP (Worldwide harmonized Light vehicles Test Procedure).
4) Die Optimierung und Validierung des Antriebssystems erfolgt anhand dieser Fahrzyklen. Die Fahrzeuge werden mit entsprechender Messausrüstung versehen und entsprechend der in 1) ermittelten Testprozedur vermessen. Die Optimierung von Systemtopologie, Regelungsfunktionen und -parametern erfolgt im Wesentlichen auf stationären Zuständen des Antriebssystems und anhand dieser Zyklen.

Dadurch wird allerdings kein Antriebssystem zur Verfügung gestellt, das bezüglich seiner Abgasemissionen die hohe Anforderung erfüllt, die Umwelt im realen Fahrbetrieb minimal zu beeinflussen. Das Validierungsergebnis ist nur begrenzt aussagekräftig, da der gesamte Betriebszustandsraum des Antriebssystems nur sehr stichprobenartig abgedeckt wird und vor allem die statistische Verteilung der Betriebszustände nicht korrekt durch die Fahrzyklen repräsentiert sind.

Daraus resultiert somit zum einen ein nennenswertes Risiko, die Gesetzgebung in Bezug auf die Abgasemissionen nicht einzuhalten, und zum anderen wird das Antriebssystem bezüglich Emissionen nicht im Hinblick auf die Gesamtheit aller Fahrten und unter Berücksichtigung der jeweiligen Häufigkeiten optimiert.

In einigen Ländern sieht die Gesetzgebung vor, die Zulassung neuer Kraftfahrzeuge, die mittels einer Brennkraftmaschine angetrieben werden, abhängig von den Emissionen zu machen, die sich im praktischen Fahrbetrieb ergeben. Hierfür ist auch die englische Bezeichnung *real driving emissions* gebräuchlich. Solche Kraftfahrzeuge umfassen beispielsweise solche, die ausschließlich von einem Verbrennungsmotor angetrieben werden, aber auch solche mit einem hybridisierten Antriebsstrang.

Hierzu ist vorgesehen, dass ein Prüfer mit dem Kraftfahrzeug einen Fahrzyklus oder mehrere Fahrzyklen bestreitet und die dabei entstehenden Emissionen gemessen werden. Die Zulassung des Kraftfahrzeugs ist dann abhängig von diesen gemessenen Emissionen. Der Fahrzyklus kann hierbei innerhalb weiter Grenzen vom Prüfer frei gewählt werden. Eine typische Dauer eines Fahrzyklus kann hierbei beispielsweise 90-120min betragen.

Für Hersteller von Kraftfahrzeugen stellt sich damit in der Entwicklung von Kraftfahrzeugen die Herausforderung, bereits frühzeitig im Entwicklungsprozess eines neuen Kraftfahrzeugs absehen zu müssen, ob die Emissionen dieses Kraftfahrzeugs in jedem zulässigen Fahrzyklus innerhalb der gesetzlich vorgeschriebenen Grenzen bleibt, oder nicht.

Es ist daher wesentlich, Verfahren und Vorrichtungen bereitzustellen, die bereits im Entwicklungsstadium eines Kraftfahrzeugs die voraussichtlichen Emissionen des Kraftfahrzeugs sicher vorhersagen kann, um im Falle eines voraussichtlichen Überschreitens von Grenzwerten Änderungen am Kraftfahrzeug durchführen zu können. Eine derartige Abschätzung allein auf Basis von Messungen auf einem Prüfstand bzw. in einem fahrenden Kraftfahrzeug ist wegen der großen Vielfalt denkbarer Fahrzyklen überaus aufwändig.

Im Stand der Technik wird daher zum Beispiel vorgeschlagen, sogenannte Leitzyklen zu bestimmen, für die eine Erfüllung von Emissionsvorgaben besonders herausfordernd ist. Dabei wird davon ausgegangen, dass mutmaßlich für alle denkbaren Fahrzyklen die Emissionsvorgaben erfüllt sein werden, wenn dies für die herausforderndsten Zyklen der Fall ist.

Neben der Anforderung, in jedem denkbaren bzw. zulässigen Fahrzyklus Abgasvorschriften erfüllen zu müssen, ist es allerdings ein bedeutendes Ziel einer Fahrzeug- bzw. Antriebsentwicklung, die Gesamtemissionen eines Fahrzeug-Antrieb-Systems im Realbetrieb zu minimieren. Bei einer Anpassung bzw. Optimierung eines Fahrzeug-Antrieb-Systems auf die kritischsten bzw. besonders kritische Fahrzyklen kann zwar möglicherweise eine Erfüllung von Normen in allen Zyklen gewährleistet werden, es besteht dadurch aber die Gefahr einer deutlichen Verschlechterung der Emissionen in weniger kritischen Zyklen. Sind dann noch die weniger kritischen Zyklen im realen Fahrbetrieb die häufigeren Zyklen, was häufig der Fall ist, verschlechtert sich durch eine solche Optimierung das Gesamtsystem bezüglich Emissionen im Realbetrieb.

Beispielsweise kann eine Optimierung der Emissionen auf einen kritischen, aber in der Realität sehr seltenen Fahrzyklus mit einem extremen Geschwindigkeitsprofil (z.B. extreme Bergfahrt mit starken Beschleunigungen) dazu führen, dass diese sich für weniger kritische, aber dafür viel häufigere Fahrzyklen mit gewöhnlichem Geschwindigkeitsprofil (z.B. kurze Stadtfahrt mit Ampeln) verschlechtern, was insgesamt zu höheren Emissionen in Realbetrieb führen kann.

Es ist daher für die Entwicklung emissionsoptimierter Fahrzeuge mit Verbrennungsmotoren sowie deren emissionsoptimierte Anpassung von großem Vorteil, eine große Anzahl realistischer Geschwindigkeitsprofile automatisch generieren zu können, deren Verteilung der generierten Geschwindigkeitsprofile einer real zu erwartenden Verteilung entspricht oder diese approximiert. Ausgangspunkt der Anpassung des Antriebssystems sind somit generierte Geschwindigkeitsprofile mit einer für den Realbetrieb repräsentativen Verteilung.

Somit stellt die computergestützte Generierung von Geschwindigkeitsprofilen in für den Realbetrieb repräsentativer Verteilung eine wichtige technische Ausgangsbasis dar, welche in verschiedenen Szenarien die Entwicklung oder Optimierung eines Fahrzeugantriebssystems entscheidend verbessern kann und damit zu emissionsärmeren und effizienteren Fahrzeugen, insbesondere zu emissionsärmeren und effizienteren Antriebssystemen von Fahrzeugen beiträgt.

Vorgestellt wird somit ein Verfahren zur Reduzierung von Abgasemissionen eines Antriebssystems eines Fahrzeugs mit Verbrennungsmotor, gekennzeichnet durch die Schritte:
- Erzeugen einer Vielzahl von ersten Fahrverläufen (51) durch ein computerimplementiertes maschinelles Lernsystem, wobei die statistische Verteilung der ersten Fahrverläufe von einer statistischen Verteilung von im Fahrbetrieb gemessenen zweiten Fahrverläufen abhängt, insbesondere dieser Verteilung folgt,
- Berechnung von jeweiligen Abgasemissionen (52) für die ersten Fahrverläufe mittels einer computerimplementierten Modellierung des Fahrzeugs oder des Antriebssystems des Fahrzeugs,
- Anpassung des Antriebssystems des Fahrzeugs (53) abhängig von mindestens einer der berechneten Abgasemissionen, wobei die Anpassung abhängig von einer Höhe oder einem Verlauf der mindestens einen der berechneten Abgasemissionen sowie abhängig von einer statistischen Häufigkeit des entsprechenden ersten Fahrverlaufs erfolgt, wobei die statistische Häufigkeit des entsprechenden ersten Fahrverlaufs mittels der statistischen Verteilung der ersten Fahrverläufe ermittelt wird.

Fahrverläufe bezeichnen dabei Verläufe von Fahreigenschaften eines Fahrzeugs, wobei die Fahreigenschaften mit Sensoren messbare, insbesondere physikalische oder technische Eigenschaften des Antriebsstrangs des Fahrzeugs sind, welche die Fortbewegung eines Fahrzeugs charakterisieren. Als bedeutendste Variante fallen unter die Fahrverläufe Geschwindigkeitsverläufe des Fahrzeugs. Der Geschwindigkeitsverlauf eines Fahrzeugs ist für eine bestimmte Fahrt eine oder die Leitgröße zur Bestimmung von Emissionen, Verbrauch, Verschleiß und vergleichbaren Größen. Ein Geschwindigkeitsverlauf kann dabei durch Geschwindigkeitswerte, aber auch durch daraus ableitbare Größen wie Beschleunigungswerte bestimmt sein. Andere wesentliche Fahreigenschaften, deren Verläufe für Anwendungen wie der Bestimmung von Emissionen, Verbrauch oder Verschleiß wesentlich sind, umfassen insbesondere eine Stellung des Fahrpedals, eine Stellung des Kupplungspedals, eine Stellung des Bremspedals oder eine Getriebeübersetzung.

Die vorgestellten Verfahren ermöglichen die effiziente Validierung und Optimierung der Abgasemissionen des Antriebssystems nicht nur auf einzelne Zyklen oder Szenarien, sondern global für den Feldbetrieb.

Dazu kann vorzugsweise auch beitragen, dass die zweiten Fahrverläufe aus einer Menge von dritten Fahrverläufen ausgewählt werden, wobei die Auswahl der zweiten Fahrverläufe derart erfolgt, dass die Verteilung der zweiten Fahrverläufe einer Verteilung tatsächlicher Fahrten entspricht. Kann nämlich für die vorgestellten Verfahren nicht auf statistisch repräsentative Fahrten zurückgegriffen werden, können die Verfahren deutlich verbessert werden, wenn durch passende Auswahl aus den verfügbaren Daten eine solche Repräsentation hergestellt bzw. angenähert wird.

In Abgrenzung zum Stand-der-Technik Vorgehen ermöglicht die virtuelle Testumgebung die Reduzierung der Abgasemissionen des Antriebssystems auf der Basis einer Vielzahl generierter Fahrzyklen im Vergleich zu ausgesuchten, stichprobenhaften Leitzyklen. Die Fahrzyklen werden mittels eines Models des realen Fahrens erzeugt, welches sicherstellt, dass zum einen der gesamte Zustandsraum hinreichend dicht abgedeckt wird und zum anderen, dass die erzeugten Fahrzyklen der Statistik des realen Fahrens im Hinblick auf die spezifische Fragestellung (z.B. die Emissionen des Antriebssystems) gut entspricht. Das wird insbesondere möglich durch die Abhängigkeit der generierten Fahrverläufen von den im Fahrbetrieb gemessenen Fahrverläufen. Die Verteilung der für die Simulation herangezogenen Fahrverläufen kann von weiteren Statistiken (wie Fahrstatistiken in bestimmten Gebieten, Wetterstatistiken etc.) abhängen.

Im vorgeschlagene Prozess sollen somit nicht mehr Testszenarien a priori, auf Basis von an Vorgängerprojekten gesammeltem Wissen, festgelegt und das System anhand dieser abgeprüft und optimiert werden, sondern es soll die Leistungsfähigkeit des Systems im Hinblick auf die Emissionen mittels Simulation im gesamten Zustandsraum ermittelt werden. Das Ergebnis bildet dabei die reale Auftretenswahrscheinlichkeit ab.

Vermieden werden kann damit ein unnötiger Fokus auf Testfälle, die wenig hilfreich für das aktuelle Antriebsystem sind, z.B. Testfälle, die sich als problematisch an Vorgängerprojekten gezeigt haben, am Entwicklungsprojekt jedoch unproblematisch sind oder ungeeignet, um tatsächliche Problemfelder des Entwicklungsprojektes aufzuzeigen, da diese in Vorgängerprojekten noch unbekannt waren.

Auch vermieden werden kann ein zu starker Fokus auf besonders anspruchsvolle Testfälle, welche oftmals zu einer Überspezifikation oder Überanpassung des Systems führen, auch wenn sie beispielsweise extrem selten sind. Dieser zu starke Fokus resultiert oft aus dem mangelnden Wissen, in welcher Konstellation und Häufigkeit einzelne Problemfelder im realen Fahrbetrieb auftreten.

Wie bereits beschrieben kann hierbei durch die repräsentative Verteilung der generierten Fahrverläufe eine Anpassung erfolgen, welche das Antriebssystem bezüglich Emissionen nicht auf einzelne oder besonders kritische Fahrverläufe optimiert. Vielmehr wird eine Optimierung des Antriebssystems derart ermöglicht, dass die im Realbetrieb zu erwartenden Emissionen insgesamt minimiert werden, d.h. die Summe der Endrohremissionen über alle Fahrten minimal werden.

Die Optimierung kann dabei durch eine automatisierte Anpassung einer Topologie von Komponenten eines Antriebssystems, eine automatisierte Anpassung der Komponenten des Antriebssystems oder eine automatisierte Anpassung von Softwarefunktionen für das Antriebssystem in der Entwicklung des Antriebssystems erfolgen. Das entsprechend angepasste Antriebsystem wird dann entsprechend gefertigt und im Fahrzeug eingesetzt. Die Optimierung kann auch durch eine Anpassung von Daten in einer Applikation des Antriebssystems erfolgen, wobei das entsprechend applizierte Antriebssystem im Fahrzeug eingesetzt wird. Die Optimierung kann weiterhin durch eine Anpassung von Steuerfunktionen oder Steuergrößen einer Steuersoftware im Betrieb des Antriebssystems im Fahrzeug erfolgen.

In einer bevorzugten Ausgestaltung erfolgt die Berechnung der Abgasemissionen nicht nur abhängig von den generierten Fahrverläufen, z.B. von den Geschwindigkeitsprofilen zu einer bestimmten Fahrtroute, sondern abhängig von auch Routeninformationen aus den zugehörigen Fahrtrouten, z.B. von Steigungsverläufen der Route. Hierdurch können genauere bzw. realistischere Abgasemissionswerte berechnet werden, welche die folgende Anpassung somit verbessern.

Die statistische Verteilung der ersten Fahrverläufe umfasst vorzugsweise eine statistische Verteilung der ersten Fahrverläufe zusammen mit jeweils zugehörigen ersten Fahrtrouten. Entsprechend umfasst die statistische Verteilung der im Fahrbetrieb gemessenen zweiten Fahrverläufe vorzugsweise eine statistische Verteilung der zweiten Fahrverläufe zusammen mit jeweils zugehörigen im Fahrbetrieb gemessenen zweiten Fahrtrouten. D.h. in beiden Fällen wird die Verteilung für jeweilige Paare aus Fahrverlauf und zugehöriger Fahrtroute betrachtet. Die Fahrtrouten umfassen dabei Routeneigenschaften wie insbesondere geografische Eigenschaften, Eigenschaften des Verkehrsflusses, Fahrbahneigenschaften, Eigenschaften der Verkehrsführung und / oder Wettereigenschaften der Route.

Ein bevorzugtes computerimplementiertes Training für das maschinelle Lernsystem zur Generierung der Fahrverläufe umfasst die folgenden Schritte:
- aus einer ersten Datenbank mit Fahrtrouten werden erste Fahrtrouten ausgewählt,
- ein Generator des maschinellen Lernsystems erhält die ersten Fahrtrouten als Eingangsgrößen und generiert zu den ersten Fahrtrouten jeweils zugehörige erste Fahrverläufe,
- in einer zweiten Datenbank sind Fahrtrouten und jeweils zugehörige, im Fahrbetrieb erfasste Fahrverläufe abgespeichert,
- aus der zweiten Datenbank werden zweite Fahrtrouten sowie jeweils zugehörige zweite, im Fahrbetrieb erfasste Fahrverläufe ausgewählt,
- ein Diskriminator des maschinellen Lernsystems erhält als Eingangsgrößen Paare aus einer der ersten Fahrtrouten mit jeweils zugehörigem ersten, generierten Fahrverlauf und Paare aus zweiten Fahrtrouten mit jeweils zugehörigem zweiten, im Fahrbetrieb erfassten Fahrverlauf,
- der Diskriminator berechnet abhängig von den Eingangsgrößen Ausgaben, welche für jedes als Eingangsgrößen erhaltene Paar charakterisieren, ob es sich um ein Paar mit einem ersten, generierten Fahrverlauf oder um ein Paar mit einem zweiten, im Fahrbetrieb erfassten Fahrverlauf handelt,
- abhängig von den Ausgaben des Diskriminators wird eine Zielfunktion optimiert, welche eine Distanz zwischen der Verteilung der Paare mit ersten, generierten Fahrverläufen und der Verteilung der Paare mit zweiten, im Fahrbetrieb erfassten Fahrverläufen darstellt.

Ein alternatives bevorzugtes computerimplementiertes Training für das maschinelle Lernsystem zur Generierung der Fahrverläufe umfasst die folgenden Schritte:
- ein Generator des maschinellen Lernsystems erhält erste Zufallsvektoren als Eingangsgrößen und generiert zu den ersten Zufallsvektoren jeweils erste Fahrtrouten und zugehörige erste Fahrverläufe,
- in einer Datenbank sind Fahrtrouten und jeweils zugehörige, im Fahrbetrieb erfasste Fahrverläufe abgespeichert,
- aus der Datenbank werden zweite Fahrtrouten sowie jeweils zugehörige zweite, im Fahrbetrieb erfasste Fahrverläufe ausgewählt,
- ein Diskriminator des maschinellen Lernsystems erhält als Eingangsgrößen erste Paare aus ersten generierten Fahrtrouten und jeweils zugehörigen ersten, generierten Fahrverläufen und zweite Paare aus zweiten Fahrtrouten und jeweils zugehörigen zweiten, im Fahrbetrieb erfassten Fahrverläufen,
- der Diskriminator berechnet abhängig von den Eingangsgrößen Ausgaben, welche für jedes als Eingangsgrößen erhaltene Paar charakterisieren, ob es sich um ein erstes Paar aus einer ersten generierten Fahrtroute und einem jeweils zugehörigen ersten, generierten Fahrverlauf oder um ein zweites Paar aus einer zweiten Fahrtroute und einem jeweils zugehörigen zweiten, im Fahrbetrieb erfassten Fahrverlauf handelt,
- abhängig von den Ausgaben des Diskriminators wird eine Zielfunktion optimiert, welche eine Distanz zwischen der Verteilung der ersten Paare und der Verteilung der zweiten Paare darstellt.

Vorteilhafterweise werden abhängig von der Optimierung der Zielfunktion Parameter des maschinellen Lernsystems derart angepasst, dass
- der Diskriminator darauf optimiert wird, zwischen den ersten, generierten Fahrverläufen und den zweiten, im Fahrbetrieb erfassten Fahrverläufen zu unterscheiden,
- der Generator darauf optimiert wird, erste, generierte Fahrverläufe in einer ersten Verteilung zu generieren, welche durch den Diskriminator möglichst schwer von zweiten, im Fahrbetrieb erfassten Fahrverläufen zu unterscheiden sind, welche in einer zweiten Verteilung vorliegen.

Die beschriebenen Trainingsverfahren stellen computerimplementierte maschinelles Lernsysteme zur Verfügung, mit welchem repräsentative Fahrverläufe generiert werden können, wodurch wiederum Maßnahmen wie eine Emissionsoptimierung bzw. eine Validierung eines Systems bezüglich Emissionen unter Berücksichtigung der tatsächlichen, repräsentativen Auswirkungen erfolgen können.

Die Modellierung des Fahrzeugs oder des Antriebssystems des Fahrzeugs umfasst in vorteilhaften Ausgestaltungen ein Modell des Verbrennungsmotors und / oder ein Modell eines Abgasnachbehandlungssystems des Verbrennungsmotors und / oder ein Modell eines Motorsteuergeräts und / oder ein Modell eines Verbrennungsprozesses, wodurch besonders präzise Simulationsergebnisse ermöglicht werden.

Zur Durchführung der beschriebenen, computerimplementierten Verfahren können Computerprogramme eingerichtet sein und auf maschinenlesbaren Speichern abgelegt werden. Ein computerimplementiertes Lernsystem umfassend einen solchen maschinenlesbaren Speicher kann dazu eingerichtet sein, die Verfahren durchzuführen, wobei die durchzuführenden Berechnungen durch einen oder mehrere Prozessoren des computerimplementierten Lernsystems ausgeführt werden.

### Beschreibung der Ausführungsbeispiele

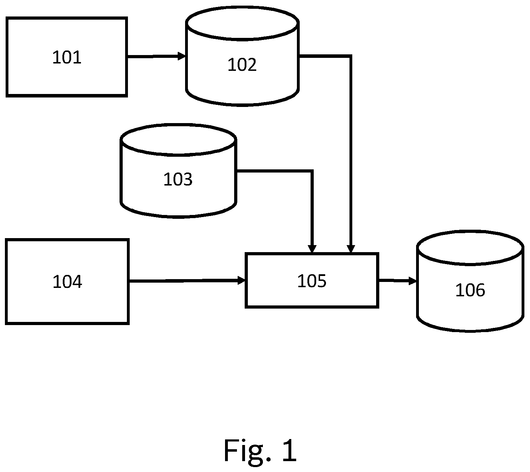

Fig. 1 zeigt ein herkömmliches Vorgehen zur Reduzierung von Abgasemissionen eines Fahrzeugs mit Verbrennungsmotor. In einem Schritt 101 werden Ergebnisse von Vorgängerprojekten bzw. Erfahrungswerte betrachtet und in einem Schritt 102 Testfälle ausgesucht, welche insbesondere kritische Fahrzyklen abdecken sollen. Vorgeschriebene Testprozeduren aus der Gesetzgebung werden in Schritt 103 zusammengestellt. In Schritt 104 erfolgt eine Definition des zu optimierenden Fahrzeugs bzw. Antriebssystems. In Schritt 105 werden für das zu optimierende Fahrzeug bzw. Antriebssystem für die in den Schritten 102 und 103 ausgewählten Testzyklen bzw. vorgeschriebenen Testprozeduren Messungen der Abgasemissionen durchgeführt. Dabei können die Messungen beispielsweise in der Größenordnung ∼100h liegen und die entsprechenden Ergebnis in Schritt 106 abgelegt bzw. ausgewertet werden. Abhängig von den durchgeführten Messungen kann das Fahrzeug bzw. Antriebssystem optimiert werden.

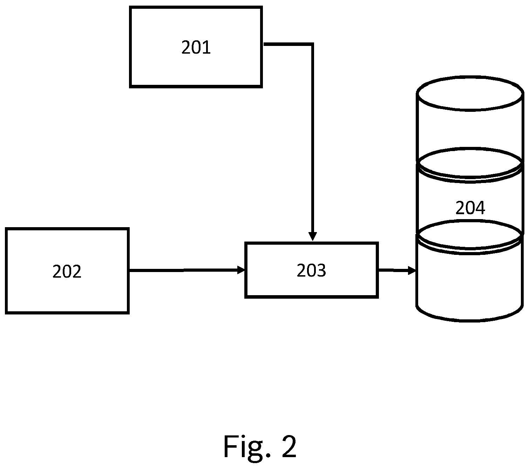

Fig. 2 zeigt ein vorgeschlagenes Vorgehen zur Reduzierung von Abgasemissionen eines Fahrzeugs mit Verbrennungsmotor. In Schritt 201 werden durch ein generatives Modell eines maschinellen Lernsystems des realen Fahrens repräsentative Paare aus Fahrverläufen und zugehörigen Fahrtrouten gewonnen. In Schritt 202 wird für das zu optimierende Fahrzeug bzw. Antriebssystem ein Fahrzeugmodell bzw. ein Modell des Antriebssystems erstellt. Die Modellierung des Fahrzeugs bzw. Antriebssystems in umfasst insbesondere Teilmodelle eines Abgasnachbehandlungssystems, Verbrennungsmodelle und / oder eines Steuergeräts, insbesondere eines Motorsteuergeräts.

In Schritt 203 erfolgt simulativ für die repräsentativen Paare aus Fahrverläufen und zugehörigen Fahrtrouten aus Schritt 201 eine Berechnung von Abgasemissionen mittels des Fahrzeugmodells bzw. des Modells des Antriebssystems aus Schritt 202. Die Ergebnisse der Simulationen werden dann in Schritt 204 abgelegt bzw. ausgewertet. Dabei kann die Anzahl an Simulationen beispielsweise in der Größenordnung ∼10.000h liegen. Zudem kann die Verteilung der Simulationen der tatsächlichen Verteilung von Fahrverläufen und Fahrtrouten im Realbetrieb entsprechen bzw. diese approximieren. Die Relevanz bzw. statistische Häufigkeit bestimmter Fahrverläufe und Fahrtrouten kann bei der Anpassung des Antriebssystems abhängig von den berechneten Abgasemissionen berücksichtigt werden.

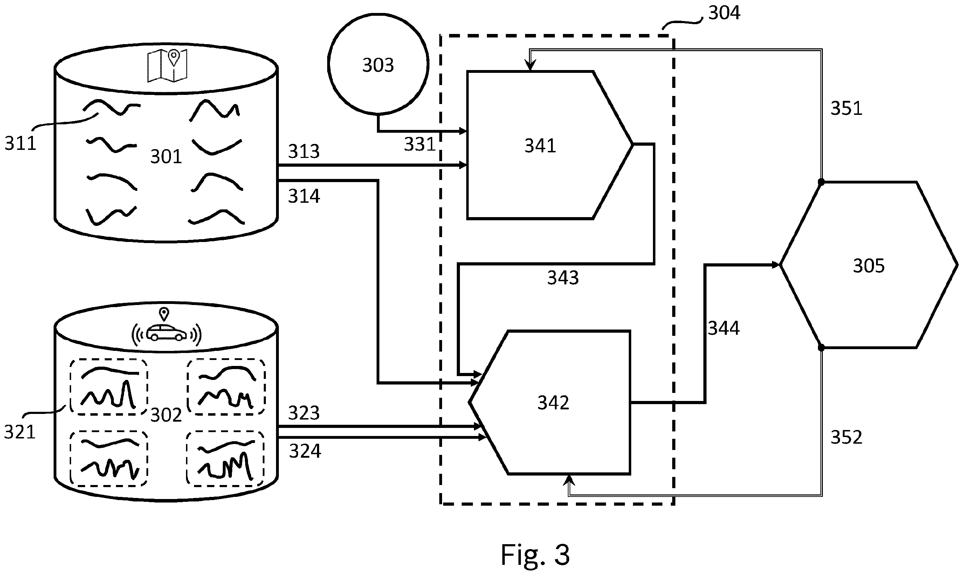

Figur 3 zeigt beispielhaft ein computerimplementiertes Trainingsverfahren für ein maschinelles Lernsystem, mit welchem für das zu Figur 2 beschriebene Verfahren repräsentative Paare aus Fahrverläufen und zugehörigen Fahrtrouten generiert werden können.

In einer Datenbank 301 sind Fahrtrouten bzw. Routen von Fahrzeugen abgelegt. Eine beispielhafte Route in Datenbank 301 ist in Fig. 3 mit 311 bezeichnet. In einer Datenbank 302 sind Fahrtrouten bzw. Routen von Fahrzeugen gemeinsam mit jeweils einem zugehörigen Fahrverlauf abgelegt. Eine beispielhaftes Paar aus Route und zugehörigem Fahrverlauf in der Datenbank 302 ist in Fig. 3 mit 321 bezeichnet. Die Fahrverläufe in Datenbank 302 entsprechen dabei im Fahrbetrieb des Fahrzeugs ermittelten oder gemessenen Fahrverläufen. D.h. die Fahrverläufe wurden vorzugsweise beim tatsächlichen Abfahren der zugehörigen Route mit einem Fahrzeug von Sensoren des Fahrzeugs erfasst und abgespeichert. Die Datenbanken 301 und 302 sind im Gesamtsystem insbesondere auf maschinenlesbaren Speichern implementiert. Dabei werden mit Datenbank lediglich auf einem maschinenlesbaren Speicher systematisch abgelegte Daten bezeichnet.

Im maschinellen Lernsystem 304 soll nun ein Generator 341 darauf trainiert werden, zu Routen der Datenbank 301 Fahrverläufe generieren. Diese Fahrverläufe sollen vorzugsweise abhängig von zufälligen Eingangsgrößen bestimmt werden, wozu in Block 303 Zufallsgrößen wie Zufallsvektoren bereitgestellt werden können. In Block 303 kann insbesondere ein Zufallsgenerator implementiert sein, wobei es sich dabei auch um einen Pseudozufallsgenerator handeln kann.

Die durch den Generator 341 generierten Fahrverläufe sollen vorzugsweise von den im Fahrbetrieb ermittelten Fahrverläufen aus der Datenbank 302 möglichst nicht oder kaum unterscheidbar sein. Hierzu wird ein Diskriminator 342 darauf trainiert, möglichst gut zwischen durch Generator 341 generierten Fahrverläufen und von Datenbank 302 gezogenen Fahrverläufen, bzw. zwischen den jeweiligen Paaren aus Fahrverläufen und Routeneigenschaften unterscheiden zu können. Das Lernsystem soll dabei nicht nur einzelne Fahrverläufe generieren, die möglichst nicht oder kaum von einzelnen im Fahrbetrieb ermittelten Fahrverläufen unterschieden werden können. Vielmehr soll auch die Verteilung der generierten Fahrverläufe im Parameterraum der Eingangsgrößen möglichst nahe an der Verteilung der im Fahrbetrieb ermittelten Fahrverläufe im Parameterraum der Eingangsgrößen liegen, also eine repräsentative Verteilung von Fahrverläufen erreicht werden.

Das Training des maschinellen Lernsystems 304 umfasst hierzu die Optimierung einer Zielfunktion 305, abhängig von welcher Parameter des Generators 341 und des Diskriminators 342 angepasst werden.

Im Folgenden soll das vorgeschlagene Training des maschinellen Lernsystems 304 anhand von Fig. 3 detaillierter beschrieben werden.

Eine Route in der Datenbank 301 ist insbesondere als Abfolge diskreter Datenpunkte gespeichert, wobei für jeden Datenpunkt bzw. jeden Diskretisierungsschritt Routeneigenschaften in diesem Diskretisierungsschritt gespeichert sind.

Eine Route r in der Datenbank 1 weist beispielsweise eine Länge N auf: *r* = (*r*₁, *..., r_{N}*). Jeder Datenpunkt *rₜ* entspricht einem Diskretisierungsschritt. Besonders bevorzugt sind Realisierungen, in denen die Diskretisierungsschritte einer zeitlichen oder räumlichen Diskretisierung entsprechen. Bei der zeitlichen Diskretisierung entsprechen die Datenpunkte jeweils einer verstrichenen Zeit seit Beginn der Route und damit die Abfolge der Datenpunkt einem zeitlichen Verlauf. Bei der räumlichen Diskretisierung entsprechen die Datenpunkte jeweils einer zurückgelegten Strecke entlang der Route.

Die Abtastrate ist in der Regel konstant. In einer zeitlichen Diskretisierung kann die Abtastrate z.B. als x Sekunden definiert werden, in einer räumlichen Diskretisierung z.B. als x Meter.

Jeder Datenpunkt *rₜ* der Route beschreibt die Routeneigenschaften an dem entsprechenden Diskretisierungsschritt, d.h. *rₜ* ∈ *R^{D}*. D ist die Anzahl der Routeneigenschaften, wobei hierbei jede Dimension von mehrdimensionale Routeneigenschaften als eine Dimension einer eindimensionalen Routeneigenschaft gezählt wird.

Solche Routeneigenschaften können z.B. sein, jeweils bezogen auf den Diskretisierungsschritt, insbesondere den Zeitpunkt bzw. Zeitabstand oder den Ort bzw. die Strecke oder Entfernung:
- Geografische Eigenschaften wie absolute Höhe oder Steigung
- Eigenschaften des Verkehrsflusses wie zeitabhängige Durchschnittsgeschwindigkeit des Verkehrs
- Fahrbahneigenschaften wie Anzahl der Fahrspuren, Fahrbahntyp oder Fahrbahnkrümmung
- Eigenschaften der Verkehrsführung wie Geschwindigkeitsbeschränkungen, Anzahl der Ampeln oder Anzahl bestimmter Verkehrsschilder, insbesondere Stopp oder Vorfahrt gewähren oder Fußgängerüberwege
- Wettereigenschaften wie Regenmenge zum vorgegebenen Zeitpunkt, Windgeschwindigkeit, Existenz von Nebel

Eine Route aus Datenbank 301 wird ausgewählt und in Schritt 313 an Generator 341 übermittelt.

Zusätzlich wird vorzugsweise in Block 303 ein Zufallsvektor ermittelt und dieser in Schritt 331 an den Generator 341 übermittelt. Ein Zufallsvektor z wird gezogen, das heißt zufällig ermittelt. Dabei gilt insbesondere *z*∈*R^{L}*, wobei L optional von der Länge der Route N abhängen kann. Die Verteilung, aus der z gezogen wird, ist vorzugsweise festgesetzt auf eine einfache Verteilungsfamilie, z.B. Gauß-Verteilung oder Gleichverteilung.

Die Eingangsgrößen des Generators 341 setzt sich nunmehr vorzugsweise aus den Variablen Zufallsvektor z und Route r zusammen. Anders als durch einen rein zufällig generierten Eingang in den Generator 341 können somit die generierten Fahrverläufe auf bestimmte Routeneigenschaften konditioniert werden. Beispielsweise können durch Sampeln verschiedener z unterschiedliche Fahrverläufe für dieselbe vorgegebene Route r generiert werden. Die Routeneigenschaften der Routen r in Datenbank 301 können dabei tatsächlich gemessene Routeneigenschaften sein, von Experten definierte Routeneigenschaften oder von einem maschinellen Lernsystem, z.B. ein neuronales Netz, gelernte Routeneigenschaften. Es können auch Routen mit aus zwei oder drei dieser Varianten erstellten Routeneigenschaften in Datenbank 301 bereitgestellt werden.

In einem beispielhaften Anwendungsfall, in welchem die generierten Fahrverläufe zum Bestimmen von Emissionseigenschaften eines Antriebssystems eines Fahrzeugs eingesetzt werden, kann beispielsweise durch gezieltes Ändern einiger Routeneigenschaften, Generierung passender Fahrverläufe und Simulation der Emissionen für diese Profile gezielt untersucht werden, in welchem Maße bestimmte Routeneigenschaften Einfluss auf die Emissionsentstehung im Verbrennungsprozess haben. Dies erlaubt beispielsweise eine gezielte Optimierung der Parameter des Antriebssystems für bestimmte, z.B. für besonders fordernde Routenprofile, insbesondere von Parametern einer Steuerung des Antriebssystems, z.B. in einem Steuergerät.

Generator 341 generiert nun abhängig von den Eingangsgrößen Zufallsvektor (Schritt 331) und ausgewählter Route (Schritt 313) einen Fahrverlauf. Der Generator 342 verfügt hierzu über einen computerimplementierten Algorithmus, mit welchem ein generatives Modell umgesetzt ist und den Fahrverlauf ausgibt (Schritt 343).

Ein solcher durch den Generator 341 generierter Fahrverlauf kann beispielsweise als *x* =( *x*₁, ..., *x_{N}* ) ausgegeben werden und somit die gleiche Länge N wie die Route aufweisen, auf die er konditioniert wurde. Alternativ können aber beispielsweise auch die Routeneigenschaften diskretisiert über den Ort vorliegen, die generierten Geschwindigkeiten allerdings diskretisiert über die Zeit. Hierzu können nach jedem einzelnen Schritt vom vorherigen Ort über die generierte Geschwindigkeit der nächste Diskretisierungszeitpunkt berechnet werden und dann die Routeneigenschaften an diesem Ort als input für x_{{t+1}} verwendet werden.

Konditioniert ist der Fahrverlauf auf die ausgewählte und dem Generator übermittelte Route aus Datenbank 301. Die Varianz der möglichen Fahrverläufe für ein und dieselbe Route wird über die Zufallsverteilung von z abgebildet. Das generative Modell ist parametrisiert über die Parameter *θ_{G}* . Die Architektur des Generativen Modells kann beispielsweise ein rekurrentes Neuronales Netz sein. Die Computerimplementierung des Generators erfolgt durch Ablage des Algorithmus, welcher das generative Modell umsetzt, sowie der Parameter des Modells in einem maschinenlesbaren Speicher, durch ein Abarbeiten der Berechnungsschritte des Algorithmus durch einen Prozessor sowie ein Speichern der generierten Fahrverläufe in einem maschinenlesbaren Speicher.

In einer möglichen Ausgestaltung können die Fahrverläufe mit einer fixen Länge generiert werden, d.h. mit einer festgelegten Zahl an Diskretisierungsschritten bzw. Datenpunkten. Bei Generierung längerer Fahrverläufe müssten dann mehrere generierte, kurze Zeitreihen aneinandergehängt werden. Die Übergänge wären dabei jedoch in der Regel nicht konsistent. In einer alternativen Ausgestaltung kann das Verfahren derart erweitert werden, dass auch Fahrverläufe beliebiger Länge generiert oder bewertet werden können und die Übergänge stets konsistent mit dem gelernten Übergangsmodell sind. Hierzu werden vorzugsweise sowohl das der Generator, als auch der Diskriminator als rekurrentes neuronales Netz implementiert, beispielsweise als long short-term memory (LSTM) neural network oder gated recurrent units (GRU). Architektonisch ist der Generator vorzugsweise als Sequenz-zu-Sequenz-Modell ausgeführt, kann aber auch als ein Vektor-zu-Sequenz-Modell implementiert werden. Der Diskriminator ist vorzugsweise als Sequenz-zu-Skalar-Modell ausgeführt, kann aber auch als ein Sequenz-zu-Sequenz Modell implementiert werden.

Für die Architektur des generativen Modells als rekurrentes neuronales Netz ergeben sich verschiedene Optionen.

Beispielsweise kann ein globaler Zufallsvektors z für den kompletten Fahrverlauf gesampelt werden, wobei sich die Bezeichnung global wiederum auf eine zeitliche oder räumliche Diskretisierung beziehen kann. In dieser Ausgestaltung werden im latenten Raum Eigenschaften berücksichtigt bzw. gelernt, welche den Fahrverlauf global verändern, beispielsweise über die Route konstante Eigenschaften wie konstante Fahrereigenschaften (z.B. Alter oder Erfahrung), konstante Wettereigenschaften (z.B. Dauerregen) oder konstante Fahrzeugeigenschaften (z.B. Motorisierung). Dieser Zufallsvektor kann nun entweder zur Initialisierung des versteckten Zustands (hidden states) im ersten Zeitschritt verwendet werden oder/und dem rekurrenten neuronalen Netz in jedem Zeitschritt zugeführt werden.

Es können auch lokale bzw. temporäre Zufallsvektoren z gesampelt werden, d.h. im latenten Raum werden Eigenschaften berücksichtigt bzw. gelernt, welche den Fahrverlauf lokal bzw. temporär verändern, beispielsweise kurzfristige Eigenschaften wie kurzfristige Verkehrsführungs- oder Verkehrsflusseigenschaften (Zustände von Ampeln, Rückstau Kreuzung, Fußgänger auf der Fahrbahn). Ein Zufallsvektor wird dabei im Abstand von M Zeitschritten neu generiert und dem rekurrenten neuronalen Netz zugeführt, wobei M>0. N kann auch stochastisch sein, d.h. der Zufallsvektor kann auch in zufälligen Abständen geändert werden.

In einer bevorzugten Ausgestaltung kann auch eine Kombination von globalem und lokalen bzw. temporären Zufallsvektoren implementiert werden. Einige Dimensionen des Zufallsvektors werden dabei nur einmal pro Fahrverlauf gesampelt, die restlichen Dimensionen ändern sich alle M Zeitschritte. Alternativ kann hierzu auch ein globaler Zufallsvektor dem rekurrenten neuronalen Netz grundsätzlich in jedem Zeitschritt zugeführt werden, wobei er alle M Zeitschritte durch einen lokalen (d.h. neu gesampelten) Zufallsvektor ersetzt wird.

Die Kombination von globalem und lokalem Zufallsvektor stellt sich als besonders vorteilhaft heraus, da somit Varianzen in den Daten sowohl auf Grund von globalen, wie auch von lokalen bzw. temporären Einflüssen abgebildet werden können.

Vorzugsweise kann in dem generativen Modell auch vorausschauendes bzw. prädiktives Fahren berücksichtigt werden.

So können in einer möglichen Ausgestaltung bei der Berechnung durch den Generator 41 die Routeneigenschaften rₜ zum Zeitpunkt t wahlweise durch Routeneigenschaften rₜ₊₁, ..., rₜ₊ₘ erweitert bzw. ergänzt werden. Dieser Ausgestaltung ist besonders vorteilhaft bei Online-Berechnungen, d.h. bei limitierten Rechenressourcen, oder falls der Einfluss späterer Routeneigenschaften auf wenige Diskretisierungsschritte beschränkt werden kann oder soll.

Alternativ kann ein bidirektionales rekurrentes Neuronales Netz als generatives Modell eingesetzt werden, in welchem ein versteckter Zustand (hidden state) zukünftiger Zellen des rekurrenten Neuronalen Netzes zusätzlich berücksichtigt wird. Hierdurch können explizit alle möglichen zukünftigen Zeitschritte mit einbezogen werden.

Statt also die Generierung einer Geschwindigkeit zum Zeitpunkt t lediglich auf die Routeneigenschaften zum aktuellen Zeitpunkt t (sowie gegebenenfalls auf einen hidden state von Zeitpunkt t-1) zu konditionieren, können auch zukünftige Routeneigenschaften für die Generierung der Geschwindigkeit zum Zeitpunkt t mit einbezogen werden. Die Generierung der Geschwindigkeit zum Zeitpunkt t wird somit neben den Routeneigenschaften zum Zeitpunkt t auch auf Routeneigenschaften der Zeitpunkte t+1, t+2, ..., t+m (oder ein Subset davon) konditioniert. Hiermit wird ermöglicht, sogenanntes "vorausschauendes Fahren" zu simulieren, beispielsweise die vorzeitige Reaktion eines Fahrers, vor allem im Sinne einer Geschwindigkeitsanpassung, auf eine in der Distanz bereits sichtbare Routeneigenschaft (z.B. Ampel, Geschwindigkeitslimitierung, Autobahnausfahrt etc.). Zudem wird ermöglicht, dass der Algorithmus lernen kann, am Ende einer Route zu Geschwindigkeit 0 zurückzukehren, beispielsweise indem am Ende einer Route nur noch Default-Werte wie z.B. 0 für zukünftige Routeneigenschaften vorliegen.

Eine Route in der Datenbank 302 ist insbesondere als Abfolge diskreter Datenpunkte gespeichert, wobei für jeden Datenpunkt bzw. jeden Diskretisierungsschritt Routeneigenschaften in diesem Diskretisierungsschritt gespeichert sind.

Eine Route r in der Datenbank 302 weist beispielsweise eine Länge S auf: *r* = (*r*₁, ..., *rₛ*). Jeder Datenpunkt *rₜ* entspricht einem Diskretisierungsschritt. Besonders bevorzugt sind Realisierungen, in denen die Diskretisierungsschritte einer zeitlichen oder räumlichen Diskretisierung entsprechen. Bei der zeitlichen Diskretisierung entsprechen die Datenpunkte jeweils einer verstrichenen Zeit seit Beginn der Route und damit die Abfolge der Datenpunkt einem zeitlichen Verlauf. Bei der räumlichen Diskretisierung entsprechen die Datenpunkte jeweils einer zurückgelegten Strecke entlang der Route.

Die Abtastrate ist in der Regel konstant. In einer zeitlichen Diskretisierung kann die Abtastrate z.B. als x Sekunden definiert werden, in einer räumlichen Diskretisierung z.B. als x Meter.

Jeder Datenpunkt *rₜ* der Route beschreibt die Routeneigenschaften an dem entsprechenden Diskretisierungsschritt, d.h. *rₜ* ∈ *R^{D}*. D ist die Anzahl der Routeneigenschaften, wobei hierbei jede Dimension von mehrdimensionale Routeneigenschaften als eine Dimension einer eindimensionalen Routeneigenschaft gezählt wird.

Solche Routeneigenschaften können z.B. sein, jeweils bezogen auf den Diskretisierungsschritt, insbesondere den Zeitpunkt bzw. Zeitabstand oder den Ort bzw. die Strecke oder Entfernung:
- Geografische Eigenschaften wie absolute Höhe oder Steigung
- Eigenschaften des Verkehrsflusses wie Verkehrsdichte oder zeitabhängige Durchschnittsgeschwindigkeit des Verkehrs
- Fahrbahneigenschaften wie Anzahl der Fahrspuren, Fahrbahntyp oder Fahrbahnkrümmung
- Eigenschaften der Verkehrsführung wie Geschwindigkeitsbeschränkungen, Anzahl der Ampeln oder Anzahl bestimmter Verkehrsschilder, insbesondere Stopp oder Vorfahrt gewähren oder Fußgängerübergänge
- Wettereigenschaften wie Regenmenge zum vorgegebenen Zeitpunkt, Windgeschwindigkeit, Existenz von Nebel

Dabei handelt es sich vorzugsweise um die gleichen Arten von Routeneigenschaften, welche zu den Routen in der ersten Datenbank gespeichert sind.

In der Datenbank 302 sind die derart bestimmten Routen jeweils gemeinsam mit einem der Route zugehörigen, im Fahrbetrieb tatsächlich gemessenen Fahrverlauf abgelegt. Diese Paare aus Route und zugehörigem Fahrverlauf dienen dem maschinellen Lernsystem als Trainingsdaten. Zu diesem Training werden insbesondere Paare aus Route und zugehörigem Fahrverlauf ausgewählt und in den Schritten 323 und 324 dem Diskriminator 342 übermittelt. Zudem werden dem Diskriminator 342 in den Schritten 314 bzw. 343 auch Paare bestehend aus einer Route der Datenbank 301 und einem abhängig von dieser Route durch Generator 341 generierten Fahrverlauf übermittelt.

Der Diskriminator 342 verfügt über einen computerimplementierten Algorithmus, mit welchem ein diskriminatives Modell umgesetzt wird. Als Eingangsgrößen erhält der Diskriminator 342 ein Paar bestehend aus Route und zugehörigem Fahrverlauf und entscheidet, ob das gesehene Paar einen (durch Generator 341) generierten oder einen (aus Datenbank 302 erhaltenes) tatsächlich gemessenen Fahrverlauf beinhaltet. Das Ergebnis dieser Entscheidung wird in Schritt 344 ausgegeben. Z.B. kann der Diskriminator 342 einen Wert >0 für die Entscheidung "echter Fahrverlauf" und <0 für die Entscheidung "generierter Fahrverlauf" ausgeben. Alternativ können beispielsweise auch vorher festgelegte Werte wie Klassenlabels ausgegeben werden. Das diskriminative Modell ist parametrisiert über die Parameter *θ_{D}*. Die Ausgabe 44 der Entscheidung beinhaltet insbesondere eine Wertung über die binäre Entscheidung "ja" / "nein" hinaus.

Die Computerimplementierung des Diskriminators erfolgt durch Ablage des Algorithmus, welcher das diskriminative Modell umsetzt, sowie der Parameter des Modells in einem maschinenlesbaren Speicher, durch ein Abarbeiten der Berechnungsschritte des Algorithmus durch einen Prozessor sowie ein Speichern der Ausgabe in einem maschinenlesbaren Speicher.

Der Diskriminator 342 kann beispielsweise als rekurrentes Neuronales Netz implementiert sein. Damit können insbesondere Fahrverläufe beliebiger Länge bewertet werden.

Für die Bewertung (Entscheidung generierte Fahrverläufe versus im Fahrbetrieb ermittelte Fahrverläufe Trajektorie) gibt es mehrere Ausgestaltungen. Die Bewertung kann insbesondere nach jedem einzelnen Zeitschritt neu abgegeben werden. Die globale Bewertung des Fahrverlaufs ist dann z.B. der Durchschnitt der Einzelbewertungen oder die Mehrheitsentscheidung. Alternativ kann die Bewertung des gesamten Fahrverlaufs auch nur zum letzten Zeitschritt abgegeben werden. Letztere Ausgestaltung spart insbesondere zusätzliche Berechnungsschritte und hat den weiteren Vorteil, dass der komplette Fahrverlauf gleichermaßen in die Bewertung einfließt.

Abhängig von der Ausgabe 344 des Diskriminators 342, wird in Block 305 eine Zielfunktion optimiert, insbesondere eine Verlustfunktion minimiert. Hierzu sind die Eingangsgrößen des Diskriminators insbesondere als echte Samples (d.h. Paare mit im Fahrbetrieb bestimmten Fahrverläufen) bzw. als generierte Samples (d.h. Paare mit durch den Generator 341 generierten Fahrverläufen) gelabelt. Die Zielfunktion charakterisiert dabei, inwieweit die generierten Fahrverläufe tatsächlich gemessenen Fahrverläufen entsprechen bzw. inwieweit die Verteilung der generierten Fahrverläufe im Parameterraum der Verteilung der gemessenen Fahrverläufe im Parameterraum entspricht. Abhängig von der Anpassung der Zielfunktion werden die Parameter *θ*_{G} des Generators 341 bzw. des dort umgesetzten generativen Modells sowie die Parameter *θ_{D}* des Diskriminators 342 bzw. des dort umgesetzten diskriminativen Modells angepasst. Die Parameter werden dabei insbesondere bezüglich des Gradienten der Zielfunktion angepasst.

Die Zielfunktion ist derart gewählt, dass sie einen Unterschied bzw. eine Distanz zwischen der Verteilung der generierten Fahrverläufe und der Verteilung der im Fahrbetrieb ermittelten Fahrverläufe bzw. einen Unterschied bzw. eine Distanz zwischen der Verteilung der Routen-Fahrverlauf-Paare mit generierten Fahrverläufen und der Verteilung der Routen-Fahrverlauf-Paare mit im Fahrbetrieb ermittelten Fahrverläufen charakterisiert bzw. darstellt. Durch die Wahl einer derartigen Zielfunktion kann das maschinelle Lernsystem derart trainiert werden, dass die Verteilung der generierten Daten die volle Varianz der Verteilung der gemessenen Daten widerspiegelt. Ein sogenannter Mode Collapse wird verhindert. Das heißt, es wird eine repräsentative Verteilung der Fahrverläufe bereitgestellt. Die Zielfunktion berücksichtigt dabei insbesondere auch die Varianz der unbeobachtbaren Einflüsse.

Vorzugsweise wird hierzu als Zielfunktion eine Verlustfunktion (loss) gewählt, welche als Wasserstein-Metrik bzw. Wasserstein-Distanz zwischen den Verteilungen implementiert ist.

In dieser Ausgestaltung des computerimplementierten Trainings sollte der Diskriminator vorzugsweise auf Lipschitzbeschränkte Funktionen beschränkt werden. In einer bevorzugten Ausgestaltung wird die Zielfunktion hierzu um Regularisiererterme erweitert, beispielsweise eine Gradientenbestrafung (Gradient penalty) oder eine Zentrierung (i) der Gradienten der echten Samples (das heißt der Paare mit im Fahrbetrieb bestimmten Fahrverläufen) auf 0 oder (ii) der Gradienten von generierten Samples (das heißt der Paare mit generierten Fahrverläufen) auf 0 oder (iii) der Gradienten von Samples, die das Mittel aus echten und generierten Samples darstellen, auf 1. Besonders bevorzugt wird dabei die Option "Gradient von echten Samples auf 0 zentrieren", da diese sich als die schnellste der Optionen herausgestellt hat und zu einer besonders schnellen Konvergenz des Optimierungsproblems führt. Alternativ kann ein weight clipping nach jedem Gradientenschritt erfolgen.

Die vorstehend beschriebenen Verfahren zum computerimplementierten Training des gesamten Lernsystems inklusive Generator 341 und Diskriminator 342 können als ein Min-Max-Trainingsziel beschrieben werden. Dabei maximiert der Diskriminator 342 seine korrekte Klassifikationsrate, während der Generator 341 die korrekte Klassifikationsrate minimiert, indem er möglichst Fahrverläufe generiert, welche den Diskriminator 341 fehlleiten.

Zusätzlich zu den beschriebenen Eingangsgrößen des Generators 341 können diesem auch weitere Eingangsgrößen bereitgestellt werden, beispielsweise indem sie jeweils zu jeder Fahrtroute in Datenbank 301 abgelegt sind. Beispielsweise können zu jeder Fahrtroute neben den diskretisierten Routeninformationen auch zugehörige Informationen über Fahrereigenschaften (wie Erfahrung, Alter, Aggressivität bzw. Fahrstil etc.) oder Fahrzeuginformationen (wie Leistung, Motorisierung, Art des Antriebssystems etc.) gespeichert sein. Die generierten Fahrverläufe können somit auch auf diese zusätzlichen Informationen konditioniert werden. In diesem Fall sind vorteilhafterweise für das Training des maschinellen Lernsystems 304 auch entsprechende Informationen jeweils zu den in Datenbank 302 abgelegten Fahrtrouten abgelegt. Dem Diskriminator werden sowohl zu den Routeninformationen aus Datenbank 301 (Schritt 314), als auch zu den Routeninformationen aus Datenbank 302 (Schritt 323) als Eingangsgrößen diese zusätzlichen Informationen bereitgestellt.

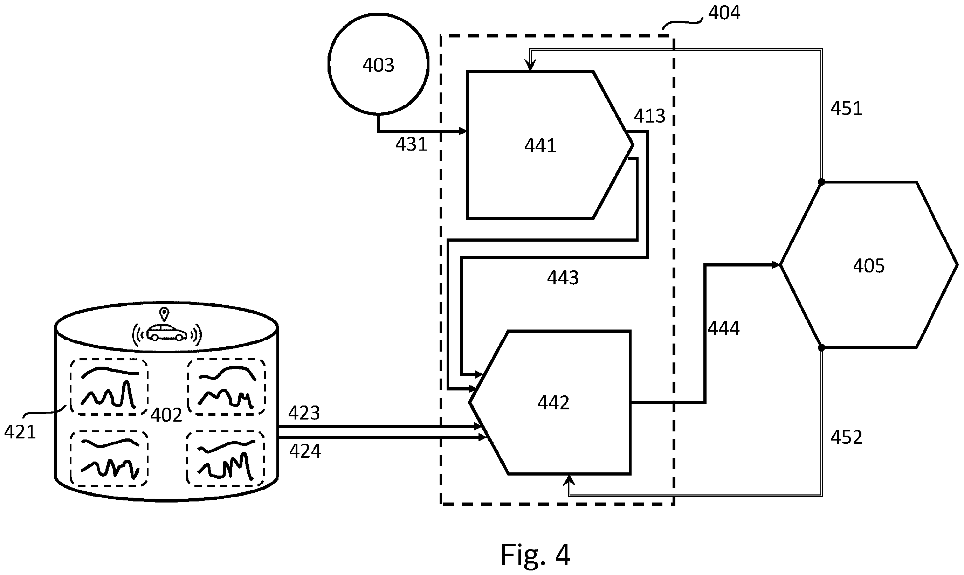

Figur 4 zeigt beispielhaft ein alternatives computerimplementiertes Trainingsverfahren für ein maschinelles Lernsystem 404.

Hierbei generiert ein Generator 441 des Lernsystems 404 auf Basis von Zufallsvektoren, welche er von einem Block 403, insbesondere einem Zufallsgenerator, in Schritt 431 als Eingangsgrößen bekommt sowohl Fahrverläufe als auch zugehörige Fahrtrouten. Die Fahrverläufe bzw. Fahrtrouten werden in Schritt 413 bzw. 443 als jeweils zusammengehörige Paare einem Diskriminator 442 als Eingangsgrößen zur Verfügung gestellt. Dieser ist entsprechend dem oben beschriebenen Verfahren darauf optimiert, diese Paare von Paaren aus Fahrverläufen und Fahrtrouten zu unterscheiden, welche er in den Schritten 423 bzw. 424 als Eingangsgrößen aus Datenbank 402 bekommt. In dieser Datenbank 402 sind wie oben zur Datenbank 302 Fahrtrouten von Fahrzeugen gemeinsam mit jeweils einem zugehörigen, im Fahrbetrieb gemessenen Fahrverlauf abgelegt. Eine beispielhaftes Paar aus Route und zugehörigem Fahrverlauf in der Datenbank 402 ist in Fig. 4 mit 421 bezeichnet. Die Ausgabe 444 des Diskriminators und die davon abhängige Berechnung der Zielfunktion 405 sowie die Optimierung der Parameter des Generators 441 in Schritt 451 und der Parameter des Diskriminators 442 in Schritt 452 erfolgen wiederum wie oben beschrieben. Insbesondre beschreibt die Zielfunktion 405 wiederum eine Distanz zwischen den Paaren aus generierten Fahrverläufen und Fahrtrouten und den tatsächlich gemessenen, in Datenbank 402 gespeicherten Paaren aus Fahrverläufen und Fahrtrouten. Die Wahl der Zielfunktion 405 kann wie zu Fig. 3 für Zielfunktion 305 beschrieben erfolgen.

Ein computerimplementiertes maschinelles Lernsystem, welches mit den beschriebenen Trainingsverfahren angelernt wird, ist in der Lage, repräsentative Fahrverläufe zu Fahrtrouten bzw. repräsentative Paare aus Fahrverläufen und Fahrtrouten zu generieren. Hierzu können dem Generator des so angelernten maschinellen Lernsystems Eingangsgrößen der gleichen Art wie im Training, also insbesondere Routen oder Zufallsgrößen sowie gegebenenfalls weitere Informationen, zugeführt werden und dieser generiert zugehörige Fahrverläufe bzw. Fahrverläufe und Fahrtrouten.

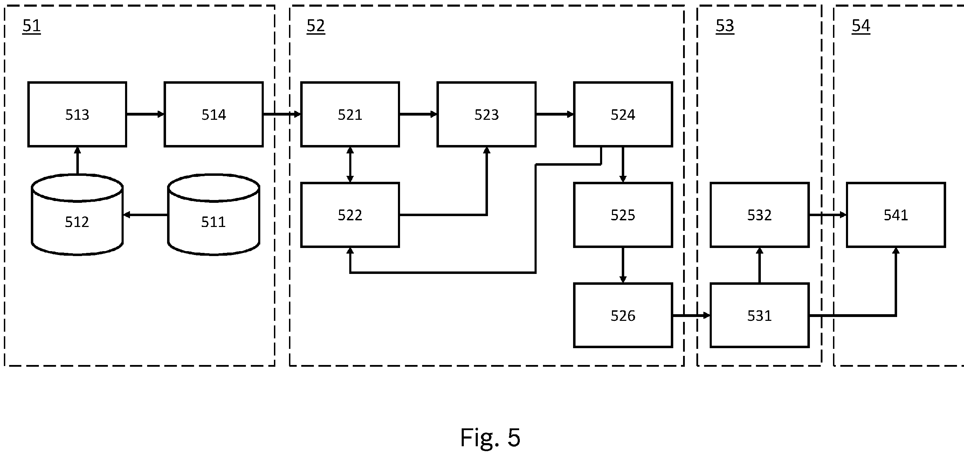

In Figur 5 ist ein beispielhaftes Verfahren zur Reduzierung von Abgasemissionen eines Fahrzeugs mit Verbrennungsmotor gezeigt.

Im Block 51 erfolgt die Generierung von für den realen Fahrbetrieb repräsentativen Fahrverläufen bzw. repräsentativen Paaren aus Fahrverläufen und Fahrtrouten.

In Block 52 werden simulativ für die generierten Fahrverläufe (beispielsweise abhängig von generierten Geschwindigkeitsverläufe) oder für die Paare aus generierten Fahrverläufen und zugehörigen Fahrtrouten (beispielsweise abhängig von generierten Geschwindigkeitsverläufen und bestimmten Routeninformationen wie Steigungsverläufen) jeweilige Abgasemissionen berechnet. Die berechneten Abgasemissionen können dabei Emissionsverläufe (zeitlich oder örtlich diskretisiert) und Gesamtemissionen umfassen, beispielsweise aufgeteilt in verschiedene Emissionskategorien (z.B. NOx, CO₂ etc.). Die Gesamtsimulation umfasst dabei insbesondere closed-loop-Simulationen, welche für möglichst genaue Emissionsmodelle erforderliche abgasrelevante Eingangsparameter, wie beispielsweise Luftmasse, Einspritzmenge, Luftverhältnis, Abgasrückführrate, Motortemperatur, oder Zünd- oder Einspritzzeitpunkte ermitteln können.

In Block 53 kann eine Analyse und oder Aufbereitung der Simulationsergebnisse bzw. berechneten Abgasemissionen erfolgen. In Block 54 erfolgt schließlich die Anpassung des Antriebssystems des Fahrzeugs abhängig von mindestens einer der berechneten Abgasemissionen, wobei die Anpassung abhängig von einer Höhe oder dem Verlauf der mindestens einen der berechneten Abgasemissionen sowie abhängig von einer statistischen Häufigkeit des entsprechenden ersten Fahrverlaufs erfolgt. Dabei wird die statistische Häufigkeit des entsprechenden ersten Fahrverlaufs mittels der statistischen Verteilung der ersten Fahrverläufe ermittelt.

Hierbei kann in einem optionalen ersten Schritt 511 eine relevante Fahrzeug- bzw. Fahrroutenauswahl getroffen bzw. eine relevante Fahrzeugflotte definiert werden. In Schritt 512 wird die Gesamtheit aller aus einer Felddatenerfassung gewonnenen Fahrrouten zu dieser Auswahl bzw. Fahrzeugflotte in einer Datenbank zur Verfügung gestellt.

In Schritt 513 kann eine Auswahl von repräsentativen Fahrrouten aus der Gesamtmenge der in der Datenbank zur Verfügung gestellten Fahrrouten erfolgen. Auch hier können Maschinen-Lernverfahren zum Einsatz kommen, wie beispielsweise Clustering. Ziel ist es insbesondere, eine Untermenge an Fahrrouten so auszuwählen, dass diese der gesamten Fahrstatistik entsprechen.

Beispielsweise sollte dann die Häufigkeit von Fahrten in der Stadt der wahren Häufigkeitsverteilung entsprechen und ebenso Eigenschaften wie zeitliche Zuordnung (z.B. Rushhour), Fahrtdauern, Fahrdistanzen, Verteilung von Steigungsanteilen usw. den wahren Häufigkeitsverteilungen entsprechen. Das ist besondere vorteilhaft, wenn der verfügbare Datensatz an Fahrtrouten den Anforderungen der Optimierung nicht ausreichend die tatsächlich im realen Fahrbetrieb anzutreffenden Häufigkeiten bzw. auszutreffende Verteilung repräsentiert.

In 514 kann dann die Generierung von Fahrverläufen zu zugehörigen Fahrrouten mithilfe eines auf Basis von Felddaten trainierten Maschinenlern-Systems erfolgen, so dass die Statistik in Bezug auf die Fahrverläufe richtig abgebildet wird.

Die Fahrtrouten und die zugehörigen generierten Fahrverläufe bilden jeweils Paare, deren Verteilung repräsentativ für tatsächlich im Fahrbetrieb vorkommenden Paaren aus Fahrtrouten und Fahrverläufen ist bzw. deren Verteilung von der Verteilung der tatsächlich im Fahrbetrieb gemessenen Paaren abhängt, bzw. dieser folgt oder diese approximiert.

In Schritt 521 können die Paare aus generierten Fahrverläufen und gegebenenfalls die zugehörigen Fahrtrouten bzw. Routeninformationen der zugehörigen Fahrtrouten als Eingangsgrößen in ein Fahrermodell eingehen. In diesem Fahrermodell wird beispielsweise der Verlauf einer Pedalstellung und der Verlauf einer Ganginformation berechnet. Eine so generierte Ganginformation kann wiederum in Schritt 522 als Eingangsgröße in ein Fahrzeugbasismodell eingehen, welches beispielsweise eine Fahrzeuggeschwindigkeit berechnet. Die in Schritt 522 berechnete Fahrzeuggeschwindigkeit und die in Schritt 521 berechnete Pedalstellung können in Schritt 523 als Eingangsgrößen in das Modell eines Steuergeräts eingehen, beispielsweise in ein modelliertes Motorsteuergerät, auf welchem Steuergerätesoftware läuft. Das Modell des Steuergeräts berechnet auf Basis der Eingangsgrößen beispielsweise Steuergrößen wie Signale des virtuellen Steuergeräts auf Pinlevel. Diese Steuergrößen können in Schritt 524 als Eingangsgrößen in ein Antriebssystembasismodell eingehen. Dieses Antriebssystembasismodell kann ein Modell eines Verbrennungsmotors sowie gegebenenfalls auch weitere Modelle, z.B. im Fall eines Hybridsystems ein Modell eines Elektromotors, umfassen. In diesem Antriebssystembasismodell kann auf Basis der Eingangsgrößen zum einen beispielsweise ein Drehmoment berechnet werden, welches wiederum als Eingangsgröße in das Fahrzeugbasismodell in Schritt 522 eingehen kann. Zum anderen können beispielsweise weitere Größen wie Kühlertemperatur, Luftmassenfluss, Abgasrückführfluss, Kraftstoffmassenfluss, Zündzeitpunkte bzw. -winkel, Einspritzzeitpunkte etc. berechnet werden. Diese weiteren berechneten Größen können in Schritt 525 als Eingangsgrößen in Modelle der Rohemissionen des Motors eingehen. Die Modelle der Rohemissionen können dabei insbesondere als datenbasierte Modelle realisiert sein, beispielsweise als Bayes'sche Regressionsmodelle. Auf Basis dieser Eingangsgrößen können in den Modellen der Rohemissionen abgasrelevante Größen wie Abgasmassenströme für verschiedene Abgasbestandteile, Abgasdruck, Abgastemperatur, Abgaszusammensetzung etc. berechnet werden. Diese berechneten abgasrelevanten Größen können in Schritt 526 als Eingangsgrößen in Modelle eines oder mehrerer Abgasnachbehandlungsmodelle eingehen. Diese Modelle können Modelle von Abgasnachbehandlungskomponenten (z.B. Katalysatoren) oder Abgasnachbehandlungsverfahren (z.B. selektiver katalytischer Reduktion) umfassen. Auf Basis der Eingangsgrößen können die Abgasnachbehandlungsmodelle die Abgasemissionen berechnen. Dabei können insbesondere Emissionsverläufe, Gesamtemissionen und / oder Zusammensetzung der Emissionen ausgegeben werden bzw. vorzugsweise nach Art der Emissionen separat aufgegliederte Verläufe der Emissionshöhen, z.B. nach Zeit oder Ort diskretisiert.

In Schritt 531 können die berechneten fahrverlaufspezifischen Abgasemissionen aufbereitet oder analysiert werden. Insbesondere kann eine Analyse erfolgen, ob die Fahrverläufe bzw. Paare aus Fahrverläufen und Fahrtrouten, zu denen Abgasemissionen berechnet wurden, bereits ausreichend den zu betrachtenden Gesamtraum abdecken bzw. ob die Verteilung der bereits berücksichtigten Fahrverläufe und Fahrtrouten bereits ausreichend die tatsächliche Verteilung approximieren. Für die spätere Anpassung können bestimmte, z.B. statistisch besonders relevante, Fahrverläufe bzw. für diese berechneten Abgasemissionen ausgewählt werden. In Schritt 532 können beispielsweise ausgewählte Fahrverläufe bzw. Abgasemissionen automatisiert nach besonderen Ereignissen durchsucht werden, beispielsweise nach besonders hohe durchschnittlichen Emissionen, besonders hohen Gesamtemissionen oder besonders hohen, z.B. grenzüberschreitenden Emissionsmaxima.

Abhängig von den in Schritt 526 berechneten Abgasemissionen und gegebenenfalls nach den Analysen und Aufbereitungen in den Schritten 531 und 532 erfolgt in Schritt 541 eine Anpassung des Antriebssystems zur Reduzierung von Abgasemissionen.

Die Anpassung des Antriebssystems erfolgt dabei vorzugsweise automatisiert auf Basis mindestens einer der berechneten Abgasemissionen unter Berücksichtigung der statistischen Relevanz des entsprechenden Fahrverlaufs bzw. der entsprechenden Fahrtroute, insbesondere also deren Bedeutung bzw. Häufigkeit im realen Fahrbetrieb. Anhand der Simulationsergebnisse können dabei eine Hardwaretopologie des Antriebssystems, Hardwarekomponenten des Antriebssystems, Regelungsfunktionen einer Steuersoftware des Antriebssystems oder Softwareparameter einer Steuersoftware des Antriebssystems angepasst werden, so dass sich vorzugsweise ein globales Emissionsoptimum einstellt, d.h. eine Reduzierung der Gesamtemissionen im realen Fahren unter Berücksichtigung der Häufigkeit bestimmter Fahrten (z.B. durch ein gewichtetes Integral über ein Produkt aus Auftretenswahrscheinlichkeit eines Fahrverlaufs und dessen kumulierte Emissionswerte).

Eine Automatisierung der Optimierung kann erfolgen, indem mindestens ein Parameter in der computerimplementierten Modellierung geändert wird, die Auswirkung der Änderung des Parameters auf die berechnete Abgasemission ermittelt wird und abhängig von der Änderung die Optimierung erfolgt. Dieser Prozess erfolgt dabei insbesondere iterativ, d.h., dass in einer Schleife abhängig von der festgestellten Auswirkung einer Änderung des Parameters auf die berechnete Abgasemission jeweils eine weitere Änderung des Parameters derart erfolgt, dass die Änderungen des Parameters zu einer Minimierung der berechneten Abgasemission führen. Abhängig von dem derart ermittelten optimalen Parameter kann dann die Optimierung des Antriebssystems erfolgen.

Veränderte Parameter können dabei einer veränderten Hardwaretopologie des Antriebssystems, veränderten Hardwarekomponenten des Antriebssystems, veränderten Regelungsfunktionen einer Steuersoftware des Antriebssystems oder veränderten Softwareparameter einer Steuersoftware des Antriebssystems entsprechen. In einer bevorzugten Ausgestaltung erfolgt eine solche Optimierung bezüglich einer Gesamtemission über alle berücksichtigten Fahrten. Hierzu wird vorzugsweise für jeden Schritt der iterativen Optimierung die komplette Simulation bezüglich allen Fahrverläufen bzw. Fahrtrouten durchgeführt, um die Auswirkung von Parameteränderungen auf die Gesamtemissionen berücksichtigen zu können.

Die generierten Fahrverläufe bzw. Fahrtrouten können somit zur Simulation von Emissionen eines Fahrzeugs und damit zur probabilistischen Beurteilung zur Einhaltung von Abgasnormen und zur Emissionsoptimierung eingesetzt werden, aus denen eine Emissionsoptimierung durch Anpassung des Antriebssystems abgeleitet wird. Diese Anpassung kann in der Entwicklung des Antriebssystems erfolgen, wobei dann die derartig angepassten Antriebssysteme beispielsweise durch Anpassung von Topologie oder von Komponenten des Antriebssystems oder durch Anpassung von Softwarefunktionen entsprechend hergestellt und eingerichtet werden und im Fahrzeug eingesetzt werden, wodurch sich die Reduzierung der Abgasemissionen realisiert. Die Anpassung kann auch in der Datenapplikation des Antriebssystems erfolgen z.B. durch Bedatung eines Steuergeräts zur Antriebssystemsteuerung, wobei dann das derart applizierte Antriebssystem bzw. Steuergerät im Fahrzeug eingesetzt wird, wodurch sich die Reduzierung der Abgasemissionen realisiert. Die Anpassung kann auch im Fahrzeug selbst ("online") erfolgen, beispielsweise durch Softwareupdates von Steuerfunktionen oder durch Parameterupdates oder Anpassung von Parametern im Fahrzeug, wodurch die Reduzierung der Abgasemissionen direkt realisiert wird.

## Patentansprüche

1. Verfahren zur Reduzierung von Abgasemissionen eines Antriebssystems eines Fahrzeugs mit Verbrennungsmotor, **gekennzeichnet durch** die Schritte:
- Erzeugen einer Vielzahl von ersten Fahrverläufen (51) durch ein computerimplementiertes maschinelles Lernsystem, wobei die statistische Verteilung der ersten Fahrverläufe von einer statistischen Verteilung von im Fahrbetrieb gemessenen zweiten Fahrverläufen abhängt,
- Berechnung von jeweiligen Abgasemissionen (52) für die ersten Fahrverläufe mittels einer computerimplementierten Modellierung des Fahrzeugs oder des Antriebssystems des Fahrzeugs,
- Anpassung des Antriebssystems des Fahrzeugs (53) abhängig von mindestens einer der berechneten Abgasemissionen, wobei die Anpassung abhängig von einer Höhe oder einem Verlauf der mindestens einen der berechneten Abgasemissionen sowie abhängig von einer statistischen Häufigkeit des entsprechenden ersten Fahrverlaufs erfolgt, wobei die statistische Häufigkeit des entsprechenden ersten Fahrverlaufs mittels der statistischen Verteilung der ersten Fahrverläufe ermittelt wird.

2. Verfahren nach Anspruch 1, **dadurch gekennzeichnet, dass** die ersten und die zweiten Fahrverläufe mit Sensoren messbare, physikalische oder technische Eigenschaften des Antriebsstrangs des Fahrzeugs darstellen, welche die Fortbewegung des Fahrzeugs charakterisieren.

3. Verfahren nach einem der vorangegangenen Ansprüche, **dadurch gekennzeichnet, dass** die ersten und die zweiten Fahrverläufe Geschwindigkeitsverläufe, Verläufe einer Stellung des Fahrpedals, Verläufe einer Stellung des Kupplungspedals, Verläufe einer Stellung des Bremspedals oder Verläufe einer Getriebeübersetzung darstellen.

4. Verfahren nach einem der vorangegangenen Ansprüche, **dadurch gekennzeichnet, dass** die ersten Fahrverläufe jeweils zu zugehörigen ersten Fahrtrouten generiert werden.

5. Verfahren nach Anspruch 4, **dadurch gekennzeichnet, dass** die Berechnung der jeweiligen Abgasemissionen für die ersten Fahrverläufen abhängig von den ersten Fahrverläufen und / oder den zugehörigen ersten Fahrtrouten erfolgt.

6. Verfahren nach einem der Ansprüche 4 oder 5, **dadurch gekennzeichnet, dass** die statistische Verteilung der ersten Fahrverläufe eine statistische Verteilung der ersten Fahrverläufe mit jeweils zugehörigen ersten Fahrtrouten umfasst und die statistische Verteilung der im Fahrbetrieb gemessenen zweiten Fahrverläufe eine statistische Verteilung der zweiten Fahrverläufe mit jeweils zugehörigen im Fahrbetrieb gemessenen zweiten Fahrtrouten umfasst.

7. Verfahren nach Anspruch 5, **dadurch gekennzeichnet, dass** die ersten Fahrtrouten durch das computerimplementierte maschinelle Lernsystem generiert werden oder durch ein weiteres computerimplementiertes maschinelles Lernsystem generiert sind.

8. Verfahren nach einem der Ansprüche 4 bis 7, **dadurch gekennzeichnet, dass** die ersten Fahrtrouten Routeneigenschaften, insbesondere geografische Eigenschaften, Eigenschaften des Verkehrsflusses, Fahrbahneigenschaften, Eigenschaften der Verkehrsführung und / oder Wettereigenschaften der Route, umfassen.

9. Verfahren nach einem der vorangegangenen Ansprüche, **dadurch gekennzeichnet, dass** das maschinelle Lernsystem mit einem computerimplementierten Training angelernt wurden, das die folgenden Schritte umfasst:
- aus einer ersten Datenbank mit Fahrtrouten werden erste Fahrtrouten ausgewählt,
- ein Generator des maschinellen Lernsystems erhält die ersten Fahrtrouten als Eingangsgrößen und generiert zu den ersten Fahrtrouten jeweils zugehörige erste Fahrverläufe,
- in einer zweiten Datenbank sind Fahrtrouten und jeweils zugehörige, im Fahrbetrieb erfasste Fahrverläufe abgespeichert,
- aus der zweiten Datenbank werden zweite Fahrtrouten sowie jeweils zugehörige zweite, im Fahrbetrieb erfasste Fahrverläufe ausgewählt,
- ein Diskriminator des maschinellen Lernsystems erhält als Eingangsgrößen Paare aus einer der ersten Fahrtrouten mit jeweils zugehörigem ersten, generierten Fahrverlauf und Paare aus zweiten Fahrtrouten mit jeweils zugehörigem zweiten, im Fahrbetrieb erfassten Fahrverlauf,
- der Diskriminator berechnet abhängig von den Eingangsgrößen Ausgaben, welche für jedes als Eingangsgrößen erhaltene Paar charakterisieren, ob es sich um ein Paar mit einem ersten, generierten Fahrverlauf oder um ein Paar mit einem zweiten, im Fahrbetrieb erfassten Fahrverlauf handelt,
- abhängig von den Ausgaben des Diskriminators wird eine Zielfunktion optimiert, welche eine Distanz zwischen der Verteilung der Paare mit ersten, generierten Fahrverläufen und der Verteilung der Paare mit zweiten, im Fahrbetrieb erfassten Fahrverläufen darstellt.

10. Verfahren nach einem der Ansprüche 1 bis 9, **dadurch gekennzeichnet, dass** das maschinelle Lernsystem mit einem computerimplementierten Training angelernt wurden, das die folgenden Schritte umfasst:
- ein Generator des maschinellen Lernsystems erhält erste Zufallsvektoren als Eingangsgrößen und generiert zu den ersten Zufallsvektoren jeweils erste Fahrtrouten und zugehörige erste Fahrverläufe,
- in einer Datenbank sind Fahrtrouten und jeweils zugehörige, im Fahrbetrieb erfasste Fahrverläufe abgespeichert,
- aus der Datenbank werden zweite Fahrtrouten sowie jeweils zugehörige zweite, im Fahrbetrieb erfasste Fahrverläufe ausgewählt,
- ein Diskriminator des maschinellen Lernsystems erhält als Eingangsgrößen erste Paare aus ersten generierten Fahrtrouten und jeweils zugehörigen ersten, generierten Fahrverläufen und zweite Paare aus zweiten Fahrtrouten und jeweils zugehörigen zweiten, im Fahrbetrieb erfassten Fahrverläufen,
- der Diskriminator berechnet abhängig von den Eingangsgrößen Ausgaben, welche für jedes als Eingangsgrößen erhaltene Paar charakterisieren, ob es sich um ein erstes Paar aus einer ersten generierten Fahrtroute und einem jeweils zugehörigen ersten, generierten Fahrverlauf oder um ein zweites Paar aus einer zweiten Fahrtroute und einem jeweils zugehörigen zweiten, im Fahrbetrieb erfassten Fahrverlauf handelt,
- abhängig von den Ausgaben des Diskriminators wird eine Zielfunktion optimiert, welche eine Distanz zwischen der Verteilung der ersten Paare und der Verteilung der zweiten Paare darstellt.

11. Verfahren nach einem der Ansprüche 9 oder 10, **dadurch gekennzeichnet, dass** abhängig von der Optimierung der Zielfunktion Parameter des maschinellen Lernsystems derart angepasst werden, dass
- der Diskriminator darauf optimiert wird, zwischen den ersten, generierten Fahrverläufen und den zweiten, im Fahrbetrieb erfassten Fahrverläufen zu unterscheiden,
- der Generator darauf optimiert wird, erste, generierte Fahrverläufe in einer ersten Verteilung zu generieren, welche durch den Diskriminator möglichst schwer von zweiten, im Fahrbetrieb erfassten Fahrverläufen zu unterscheiden sind, welche in einer zweiten Verteilung vorliegen.

12. Verfahren nach Anspruch 11, **dadurch gekennzeichnet, dass** die Parameter des maschinellen Lernsystems abhängig von einem Gradienten der Zielfunktion angepasst werden.

13. Verfahren nach einem der Ansprüche 9 bis 12, **dadurch gekennzeichnet, dass** als die Zielfunktion eine statistische Distanz zwischen einer ersten Verteilung der ersten Fahrverläufe und einer zweiten Verteilung der zweiten Fahrverläufe, implementiert ist.

14. Verfahren nach einem der Ansprüche 9 bis 13, **dadurch gekennzeichnet, dass** der Generator und / oder der Diskriminator jeweils als neuronales Netz, insbesondere als rekurrentes neuronales Netz implementiert sind.

15. Verfahren nach einem der vorangegangenen Ansprüche, **dadurch gekennzeichnet, dass** die Modellierung des Fahrzeugs oder des Antriebssystems des Fahrzeugs ein Modell des Verbrennungsmotors und / oder ein Modell eines Abgasnachbehandlungssystems des Verbrennungsmotors und / oder ein Modell eines Motorsteuergeräts und / oder ein Modell eines Verbrennungsprozesses umfasst.

16. Verfahren nach einem der vorangegangenen Ansprüche, **dadurch gekennzeichnet, dass** die Anpassung durch eine Anpassung einer Topologie oder von Komponenten des Antriebssystems, durch eine Anpassung von Steuerfunktionen einer im Antriebssystem eingerichteten Software, durch eine Anpassung von Parametern in einer Applikation des Antriebssystems oder durch eine Anpassung von Steuergrößen im Betrieb des Antriebssystems im Fahrzeug erfolgt.

17. Verfahren nach einem der vorangegangenen Ansprüche, **dadurch gekennzeichnet, dass** die zweiten Fahrverläufe aus einer Menge von dritten Fahrverläufen ausgewählt werden.

18. Verfahren nach Anspruch 17, **dadurch gekennzeichnet, dass** die Auswahl der zweiten Fahrverläufe derart erfolgt, dass die Verteilung der zweiten Fahrverläufe einer Verteilung tatsächlicher Fahrten entspricht.

19. Computerprogramm, welches dazu eingerichtet ist, ein Verfahren nach einem der vorangegangenen Ansprüche durchzuführen.

20. Maschinenlesbares Speichermedium, auf welchem ein Computerprogramm nach Anspruch 19 abgelegt ist.

## Claims

1. Method for reducing exhaust gas emissions of a drive system of a vehicle having an internal combustion engine, **characterized by** the following steps:
- generating a multiplicity of first driving characteristics (51) by way of a computer-implemented machine learning system, wherein the statistical distribution of the first driving characteristics depends on a statistical distribution of second driving characteristics measured in driving mode,
- calculating respective exhaust gas emissions (52) for the first driving characteristics by way of computer-implemented modelling of the vehicle or of the drive system of the vehicle,
- adapting the drive system of the vehicle (53) on the basis of at least one of the calculated exhaust gas emissions, wherein the adaptation is made on the basis of a level or a characteristic of the at least one of the calculated exhaust gas emissions and on the basis of a statistical frequency of the corresponding first driving characteristic, wherein the statistical frequency of the corresponding first driving characteristic is ascertained by way of the statistical distribution of the first driving characteristics.

2. Method according to Claim 1, **characterized in that** the first and the second driving characteristics constitute physical or technical properties of the drivetrain of the vehicle that are able to be measured using sensors and that characterize the locomotion of the vehicle.

3. Method according to either of the preceding claims, **characterized in that** the first and the second driving characteristics represent speed characteristics, characteristics of a position of the accelerator pedal, characteristics of a position of the clutch pedal, characteristics of a position of the brake pedal or characteristics of a transmission ratio.

4. Method according to one of the preceding claims, **characterized in that** the first driving characteristics are each generated for associated first journey routes.

5. Method according to Claim 4, **characterized in that** the respective exhaust gas emissions for the first driving characteristics are calculated on the basis of the first driving characteristics and/or the associated first journey routes.

6. Method according to either of Claims 4 and 5, **characterized in that** the statistical distribution of the first driving characteristics comprises a statistical distribution of the first driving characteristics with respectively associated first journey routes and the statistical distribution of the second driving characteristics measured in driving mode comprises a statistical distribution of the second driving characteristics with respectively associated second journey routes measured in driving mode.

7. Method according to Claim 5, **characterized in that** the first journey routes are generated by the computer-implemented machine learning system or are generated by a further computer-implemented machine learning system.

8. Method according to one of Claims 4 to 7, **characterized in that** the first journey routes comprise route properties, in particular geographical properties, traffic flow properties, roadway properties, traffic management properties and/or weather properties of the route.

9. Method according to one of the preceding claims, **characterized in that** the machine learning system has been trained through computer-implemented training, this comprising the following steps:
- first journey routes are selected from a first database containing journey routes,
- a generator of the machine learning system receives the first journey routes as input variables and generates first driving characteristics respectively associated with the first journey routes,
- journey routes and respectively associated driving characteristics acquired in driving mode are stored in a second database,
- second journey routes and respectively associated second driving characteristics acquired in driving mode are selected from the second database,
- a discriminator of the machine learning system receives, as input variables, pairs consisting of one of the first journey routes with a respectively associated first generated driving characteristic and pairs consisting of second journey routes with a respectively associated second driving characteristic acquired in driving mode,
- the discriminator, on the basis of the input variables, calculates outputs that characterize, for each pair received as input variables, whether this is a pair containing a first generated driving characteristic or a pair containing a second driving characteristic acquired in driving mode,
- on the basis of the outputs from the discriminator, a target function is optimized, this representing a distance between the distribution of the pairs containing first generated driving characteristics and the distribution of the pairs containing second driving characteristics acquired in driving mode.

10.Method according to one of Claims 1 to 9, **characterized in that** the machine learning system has been trained through computer-implemented training, this comprising the following steps:
- a generator of the machine learning system receives first random vectors as input variables and generates respective first journey routes and associated first driving characteristics for the first random vectors,
- journey routes and respectively associated driving characteristics acquired in driving mode are stored in a database,
- second journey routes and respectively associated second driving characteristics acquired in driving mode are selected from the database,
- a discriminator of the machine learning system receives, as input variables, first pairs consisting of first generated journey routes and respectively associated first generated driving characteristics and second pairs consisting of second journey routes and respectively associated second driving characteristics acquired in driving mode,
- the discriminator, on the basis of the input variables, calculates outputs that characterize, for each pair received as input variables, whether this is a pair consisting of a first generated journey route and a respectively associated first generated driving characteristic or a second pair consisting of a second journey route and a respectively associated second driving characteristic acquired in driving mode,
- on the basis of the outputs from the discriminator, a target function is optimized, this representing a distance between the distribution of the first pairs and the distribution of the second pairs.

11. Method according to either of Claims 9 and 10, **characterized in that** parameters of the machine learning system are adapted on the basis of the optimization of the target function such that
- the discriminator is optimized to distinguish between the first generated driving characteristics and the second driving characteristics acquired in driving mode,
- the generator is optimized to generate first generated driving characteristics in a first distribution that are as difficult as possible for the generator to distinguish from second driving characteristics that are acquired in driving mode and that are present in a second distribution.

12. Method according to Claim 11, **characterized in that** the parameters of the machine learning system are adapted on the basis of a gradient of the target function.

13. Method according to one of Claims 9 to 12, **characterized in that** a statistical distance between a first distribution of the first driving characteristics and a second distribution of the second driving characteristics is implemented as the target function.

14. Method according to one of Claims 9 to 13, **characterized in that** the generator and/or the discriminator are each implemented as a neural network, in particular as a recurrent neural network.

15. Method according to one of the preceding claims, **characterized in that** the modelling of the vehicle or of the drive system of the vehicle comprises a model of the internal combustion engine and/or a model of an exhaust gas aftertreatment system of the internal combustion engine and/or a model of an engine controller and/or a model of a combustion process.

16. Method according to one of the preceding claims, **characterized in that** the adaptation is performed by adapting a topology or components of the drive system, by adapting control functions of software installed in the drive system, by adapting parameters in an application of the drive system or by adapting control variables during operation of the drive system in the vehicle.

17. Method according to one of the preceding claims, **characterized in that** the second driving characteristics are selected from a set of third driving characteristics.

18. Method according to Claim 17, **characterized in that** the second driving characteristics are selected such that the distribution of the second driving characteristics corresponds to a distribution of actual journeys.

19. Computer program that is configured to perform a method according to one of the preceding claims.

20. Machine-readable storage medium on which a computer program according to Claim 19 is stored.

## Revendications

1. Procédé permettant de réduire des émissions de gaz d'échappement d'un système d'entraînement d'un véhicule à moteur à combustion interne, **caractérisé par** les étapes consistant à :
- générer une pluralité de premières courbes de conduite (51) par un système d'apprentissage machine mis en oeuvre par ordinateur, dans lequel la distribution statistique des premières courbes de conduite dépend d'une distribution statistique de deuxièmes courbes de conduite mesurées en mode conduite,
- calculer des émissions de gaz d'échappement (52) respectives pour les premières courbes de conduite au moyen d'une modélisation, mise en oeuvre par ordinateur, du véhicule ou du système d'entraînement du véhicule,
- adapter le système d'entraînement du véhicule (53) en fonction d'au moins l'une des émissions de gaz d'échappement calculées, l'adaptation étant effectuée en fonction d'un niveau ou d'une courbe de ladite au moins une des émissions de gaz d'échappement calculées ainsi qu'en fonction d'une fréquence statistique de la première courbe de conduite correspondante, la fréquence statistique de la première courbe de conduite correspondant étant déterminée au moyen de la distribution statistique des premières courbes de conduite.

2. Procédé selon la revendication 1, **caractérisé en ce que** les premières et les deuxièmes courbes de conduite représentent des propriétés physiques ou techniques, pouvant être mesurées par des capteurs, de la chaîne cinématique du véhicule qui caractérisent le mouvement du véhicule.

3. Procédé selon l'une quelconque des revendications précédentes, **caractérisé en ce que** les premières et les deuxièmes courbes de conduite représentent des courbes de vitesse, des courbes d'une position de la pédale d'accélérateur, des courbes d'une position de la pédale d'embrayage, des courbes d'une position de la pédale de frein ou des courbes d'un rapport de transmission.

4. Procédé selon l'une quelconque des revendications précédentes, **caractérisé en ce que** les premières courbes de conduite sont respectivement générées pour des premiers itinéraires associés.

5. Procédé selon la revendication 4, **caractérisé en ce que** le calcul des émissions de gaz d'échappement respectives pour les premières courbes de conduite est effectué en fonction des premières courbes de conduite et/ou des premiers itinéraires associés.

6. Procédé selon l'une quelconque des revendications 4 ou 5, **caractérisé en ce que** la distribution statistique des premières courbes de conduite comprend une distribution statistique des premières courbes de conduite avec des premiers itinéraires respectivement associés, et la distribution statistique des deuxièmes courbes de conduite, mesurées en mode conduite, comprend une distribution statistique des deuxièmes courbes de conduite avec des deuxièmes itinéraires respectivement associés, mesurés en mode conduite.

7. Procédé selon la revendication 5, **caractérisé en ce que** les premiers itinéraires sont générés par le système d'apprentissage machine mis en oeuvre par ordinateur ou par un système d'apprentissage machine mis en oeuvre par ordinateur supplémentaire.

8. Procédé selon l'une quelconque des revendications 4 à 7, **caractérisé en ce que** les premiers itinéraires comprennent des propriétés d'itinéraire, en particulier des propriétés géographiques, des propriétés de flux de la circulation, des propriétés de chaussée, des propriétés de gestion de trafic et/ou des propriétés météorologiques de l'itinéraire.

9. Procédé selon l'une quelconque des revendications précédentes, **caractérisé en ce que** le système d'apprentissage machine a été formé par un entraînement mis en oeuvre par ordinateur qui comprend les étapes suivantes :
- des premiers itinéraires sont sélectionnés dans une première base de données contenant des itinéraires,
- un générateur du système d'apprentissage machine reçoit les premiers itinéraires sous forme de grandeurs d'entrée et génère pour les premiers itinéraires respectivement des premières courbes de conduite associées,
- des itinéraires et des courbes de conduite respectivement associées, détectées en mode conduite, sont enregistrés dans une deuxième base de données,
- des deuxièmes itinéraires ainsi que des deuxièmes courbes de conduite respectivement associées, détectées en mode conduite, sont sélectionnés dans la deuxième base de données,
- un discriminateur du système d'apprentissage machine reçoit sous forme de grandeurs d'entrée des paires d'un des premiers itinéraires avec une première courbe de conduite générée, respectivement associée, et des paires de deuxièmes itinéraires avec une deuxième courbe de conduite respectivement associée, détectée en mode conduite,
- le discriminateur calcule en fonction des grandeurs d'entrée des sorties qui caractérisent pour chaque paire reçue sous forme de grandeurs d'entrée s'il s'agit d'une paire avec une première courbe de conduite générée ou d'une paire avec une deuxième courbe de conduite détectée en mode conduite,
- en fonction des sorties du discriminateur, une fonction cible est optimisée qui représente une distance entre la distribution des paires avec des premières courbes de conduite générées et la distribution des paires avec des deuxièmes courbes de conduite, détectées en mode conduite.

10. Procédé selon l'une quelconque des revendications 1 à 9, **caractérisé en ce que** le système d'apprentissage machine a été formé par un entraînement mis en oeuvre par ordinateur qui comprend les étapes suivantes :
- un générateur du système d'apprentissage machine reçoit des premiers vecteurs aléatoires sous forme de grandeurs d'entrée et génère pour les premiers vecteurs aléatoires respectivement des premiers itinéraires et des premières courbes de conduite associées,
- des itinéraires et des courbes de conduite respectivement associées, détectées en mode conduite, sont enregistrés dans une base de données,
- des deuxièmes itinéraires ainsi que des deuxièmes courbes de conduite, détectées en mode conduite, sont sélectionnées dans la base de données,
- un discriminateur du système d'apprentissage machine reçoit sous la forme de grandeurs d'entrée des premières paires de premiers itinéraires générés et de premières courbes de conduite générées, respectivement associées, et des deuxièmes paires de deuxièmes itinéraires et de deuxièmes courbes de conduite respectivement associées, détectées en mode conduite,
- le discriminateur calcule en fonction des grandeurs d'entrée des sorties qui caractérisent pour chaque paire obtenue sous forme de grandeurs d'entrée s'il s'agit d'une première paire d'un premier itinéraire généré et d'une première courbe de conduite générée, respectivement associée, ou d'une deuxième paire d'un deuxième itinéraire et d'une deuxième courbe de conduite respectivement associée, détectée en mode conduite,
- en fonction des sorties du discriminateur, une fonction cible est optimisée qui représente une distance entre la distribution des premières paires et la distribution des deuxièmes paires.

11. Procédé selon l'une quelconque des revendications 9 ou 10, **caractérisé en ce qu'**en fonction de l'optimisation de la fonction cible, des paramètres du système d'apprentissage machine sont adaptés de telle sorte que
- le discriminateur est optimisé pour distinguer les premières courbes de conduite générées et les deuxièmes courbes de conduite détectées en mode conduite,
- un générateur est optimisé pour générer des premières courbes de conduite générées dans une première distribution qui sont aussi difficilement que possible à distinguer pour le discriminateur de deuxièmes courbes de conduite, détectées en mode conduite, qui sont présentes dans une deuxième distribution.

12. Procédé selon la revendication 11, **caractérisé en ce que** les paramètres du système d'apprentissage machine sont adaptés en fonction d'un gradient de la fonction cible.

13. Procédé selon l'une quelconque des revendications 9 à 12, **caractérisé en ce que** comme fonction cible, une distance statistique entre une première distribution des premières courbes de conduite et une deuxième distribution des deuxièmes courbes de conduite est mise en œuvre.

14. Procédé selon l'une quelconque des revendications 9 à 13, **caractérisé en ce que** le générateur et/ou le discriminateur est/sont respectivement mis en oeuvre sous la forme d'un réseau de neurones, en particulier d'un réseau de neurones récurrent.

15. Procédé selon l'une quelconque des revendications précédentes, **caractérisé en ce que** la modélisation du véhicule ou du système d'entraînement du véhicule comprend un modèle du moteur à combustion interne et/ou un modèle du système de post-traitement des gaz d'échappement du moteur à combustion interne et/ou un modèle d'un appareil de commande de moteur et/ou un modèle d'un processus de combustion.

16. Procédé selon l'une quelconque des revendications précédentes, **caractérisé en ce que** l'adaptation est effectuée par une adaptation d'une topologie ou de composants du système d'entraînement, par une adaptation de fonctions de commande d'un logiciel configuré dans le système d'entraînement, par une adaptation de paramètres dans une application du système d'entraînement ou par une adaptation de grandeurs de commande en cours de fonctionnement du système d'entraînement dans le véhicule.

17. Procédé selon l'une quelconque des revendications précédentes, **caractérisé en ce que** les deuxièmes courbes de conduite sont sélectionnées parmi un ensemble de troisièmes courbes de conduite.

18. Procédé selon la revendication 17, **caractérisé en ce que** la sélection des deuxièmes courbes de conduite est effectuée de telle sorte que la distribution des deuxièmes courbes de conduite correspond à une distribution de trajets réels.

19. Programme informatique qui est configuré pour exécuter un procédé selon l'une quelconque des revendications précédentes.

20. Support de stockage lisible par machine sur lequel est enregistré un programme informatique selon la revendication 19.
